(19) Europäisches Patentamt
European Patent Office
Office européen des brevets

(11) **EP 3 543 674 A1**

## (12) EUROPEAN PATENT APPLICATION
published in accordance with Art. 153(4) EPC

(43) Date of publication:
**25.09.2019 Bulletin 2019/39**

(21) Application number: **17872593.3**

(22) Date of filing: **05.06.2017**

(51) Int Cl.:
**G01M 17/02** (2006.01)    **B60C 19/00** (2006.01)

(86) International application number:
**PCT/JP2017/020828**

(87) International publication number:
**WO 2018/092334 (24.05.2018 Gazette 2018/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **15.11.2016 JP 2016222632**

(71) Applicant: **TOYO TIRE CORPORATION**
**Itami-shi,**
**Hyogo 6640847 (JP)**

(72) Inventor: **KOIKE, Akihiro**
**Itami-shi**
**Hyogo 664-0847 (JP)**

(74) Representative: **Sajda, Wolf E.**
**Meissner Bolte Patentanwälte**
**Rechtsanwälte Partnerschaft mbB**
**Postfach 86 06 24**
**81633 München (DE)**

## (54) METHOD AND DEVICE FOR MEASURING TIRE GROUND CONTACT PROPERTIES

(57) Virtual regions (L) each having a width of $1/2^n$ (where n is a natural number greater than or equal to 1) of the detection width (W1) of a force sensor (3) provided on a tire travel surface (1) are set in a region to be measured of a tire (T). The contact position between the tire travel surface (1) and tire (T) is shifted along a prescribed direction such that the force sensor (3) touches a single virtual region a plurality of times, and the sensor (3) is used to carry out force measurement a plurality of times. Mapping data is generated that associates each measurement time with data about the positional relationship between the virtual regions (L) and sensor (3). Force values for each virtual region are calculated on the basis of the sensor detection values and the force balance relationship between the sensor (1) and virtual regions determined by a mapping data generation unit.

FIG. 3

Mapping Data

| Measurement Time | Sensor | Virtual Region(s) | |
|---|---|---|---|
| t1 | N1 | L1 | |
| t1 | N2 | L2 | L3 |
| t1 | N3 | L4 | L5 |
| t2 | N1 | L1 | L2 |
| t2 | N2 | L3 | L4 |
| t2 | N3 | L5 | |

**Description**

TECHNICAL FIELD

The present invention relates to a method and device for measuring tire ground contact properties.

BACKGROUND ART

As a method for measuring the ground contact properties of a rolling tire, Patent Reference No. 1, for example, discloses a method in which a tire is brought into contact with a rotating drum equipped with a force sensor, the rotating drum and the tire are made to rotate together, the sensor and the tire are brought into contact, and the sensor is used to measure the ground contact properties of the tire.

A three-axis force sensor is employed as the force sensor, tire contact patch pressure, shear stress in the tire width direction, and shear stress in the tire circumferential direction being measured.

PRIOR ART REFERENCES

PATENT REFERENCES

PATENT REFERENCE NO. 1: Japanese Patent Application Publication
JP 2014-21012 A

SUMMARY OF THE INVENTION

PROBLEM TO BE SOLVED BY THE INVENTION

A sensor will have a detection region of prescribed size, the force within said detection region being what it measures. Because force is measured one detection region at a time, it is impossible to carry out measurement within a region that is smaller than a detection region. For example, if the size of a detection region is 8 mm, because it is often the case that the width of a major groove a tire is less than 8 mm, it will not be possible to carry out detailed evaluation of the boundary portion of the major groove.

The smallest unit of the force distribution that is obtained will be the size of the detection region. Ability to carry out detection within a region smaller than the detection region of the sensor is therefore desired.

The present invention was conceived in view of such issues, it being an object thereof to provide a method and device for measuring tire ground contact properties permitting detection to be carried out within a region that is smaller than the size of the detection region of a sensor.

MEANS FOR SOLVING THE PROBLEMS

To solve the foregoing problem, the present invention employs means as described below.

In other words, according to the present invention, there is provided a method for measuring tire ground contact properties in which, at a region of a tire to be measured, virtual regions are established that are each $1/2^n$ of a size of a detection region width (where n is a natural number not less than 1) of a force sensor provided at a tire travel surface; measurement of force by the sensor is performed a plurality of times in such fashion that a location at which the tire travel surface and the tire come in contact is shifted in a prescribed direction so that the force sensor is made to come in contact with a single virtual region a plurality of times;

mapping data is created associating, for each measurement time, data pertaining to positional relationships between the virtual regions and the sensor; and

values of forces are calculated for each of the virtual regions based on values detected by the sensor and force composition relationships between the sensor and the virtual regions as defined by the mapping data.

Thus, a force sensor is made to come in contact with the same virtual region multiple times, and because the fractional percentages of the forces at each of the plurality of virtual regions included among the values detected by a single sensor are defined by positional relationships between virtual regions and sensors, it is possible to perform calculations to solve for the force composition relationships. As a result, it is possible to carry out detection in units of virtual regions, each of which is smaller than the detection region of sensor.

BRIEF DESCRIPTION OF THE DRAWINGS

FIG. 1    Block diagram and side view showing a device for measuring tire ground contact properties in accordance with the present invention.

FIG. 2    Plan view showing tire travel surface.

FIG. 3    Drawing showing in schematic fashion the locations at which force sensors provided at a tire travel surface come in contact with a tire.

FIG. 4A    Drawing showing how a shift in the tire width direction might occur.

FIG. 4B    Drawing showing how a shift in the tire circumferential direction might occur.

FIG. 5A    Drawing showing relationship between detection region of sensor and virtual regions that have been established.

FIG. 5B    Drawing showing relationship between detection region of sensor and virtual regions that have been established.

FIG. 6    Drawing showing positional relationship between a sensor group and the contact patch surface of a tire.

FIG. 7    Drawing showing result of measurement of contact patch pressure Pz using a sensor group for which the detection region was a square 8 mm on a side.

FIG. 8    Drawing showing result of measurement of contact patch pressure Pz when a 2-mm virtual region was established using a sensor group for which the detection region was a square 8 mm on a side.

FIG. 9    Drawing showing result of measurement of circumferential direction shear stress Px when a 2-mm virtual region was established using a sensor group for which the detection region was a square 8 mm on a side.

FIG. 10    Drawing showing result of measurement of width direction shear stress Py when a 2-mm virtual region was established using a sensor group for which the detection region was a square 8 mm on a side.

FIG. 11    Flowchart showing method for measuring tire ground contact properties.

FIG. 12    Drawing showing positional relationship between sensors and a tire.

FIG. 13    Drawing showing in schematic fashion the locations at which force sensors provided at a tire travel surface come in contact with a tire.

EMBODIMENTS FOR CARRYING OUT INVENTION

Below, an embodiment in accordance with the present invention is described with reference to the drawings.

Tire Ground Contact Properties Measurement Device

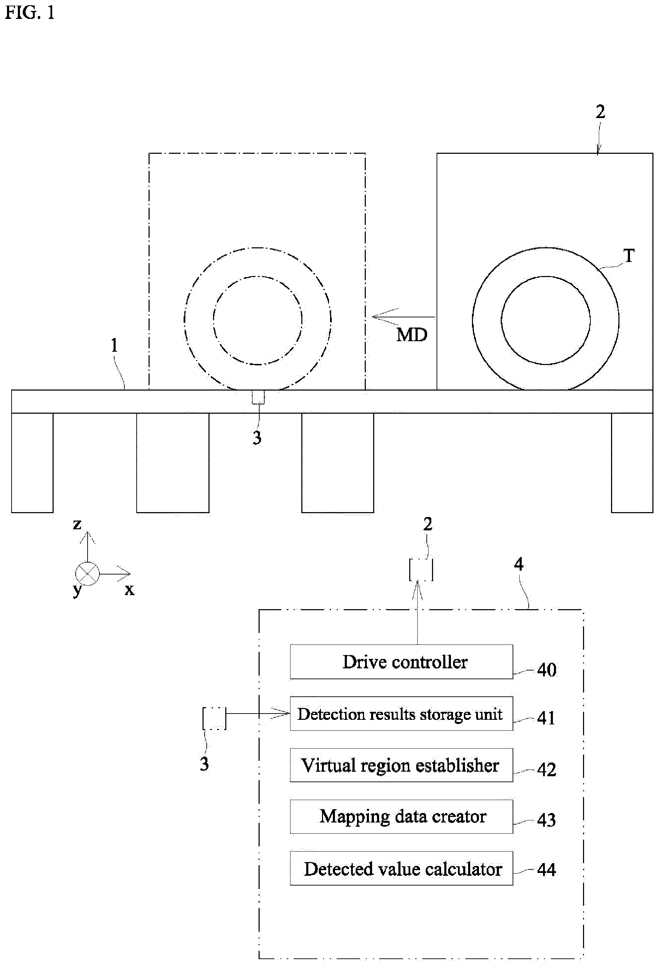

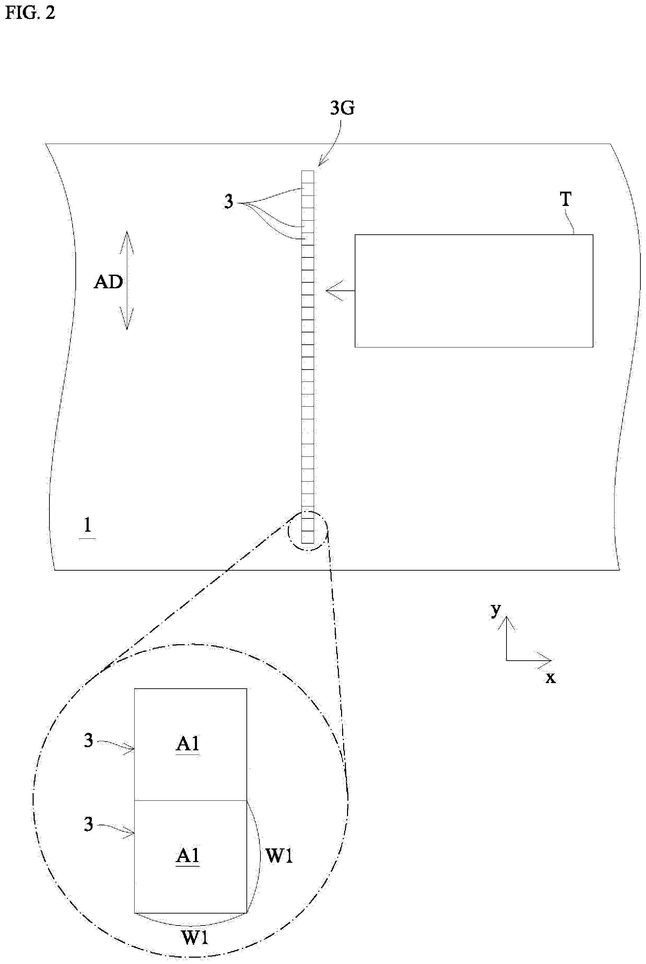

As shown in FIG. 1 and FIG. 2, a tire ground contact properties measurement device has travel surface 1 for allowing travel by tire T thereon, tire drive apparatus 2 which causes tire T to be brought into contact with and to roll on travel surface 1, force sensor 3 which is provided on travel surface 1, and controller 4 which is implemented by means of a computer.

Travel surface 1 appears rectangular as seen in plan view, being a flat surface. Force sensor 3 has rectangular detection region A1, force being measured in units the size of detection region A1 when tire T comes in contact with detection region A1. While detection region A1 of the present embodiment is in the shape of a square having a width W1 of 8 mm, there is no limitation with respect thereto.

Force sensor 3 is a three-axis force sensor and is capable of measuring circumferential direction shear force fx, width direction shear force fy, and load fz at the location at which contact with the tire occurs. A plurality of force sensors 3 are arrayed along prescribed direction AD in array-like fashion so as to constitute sensor group 3G.

Whereas, in the present embodiment, the width direction y of traveling tire T is identical to the direction AD of arrayal of sensor group 3G, and the circumferential direction x (rolling direction) of tire T is identical to a direction that is perpendicular to the direction AD of arrayal of sensor group 3G, there is no limitation with respect thereto.

For example, the circumferential direction x (rolling direction) of tire T may be made identical to the direction of arrayal of sensor group 3G. Furthermore, where measurement is carried out while tire T is made to spin, there are situations in which the direction AD of arrayal of sensor group 3G is not identical to the width direction or circumferential direction of tire T.

As shown in FIG. 1, tire drive apparatus 2 causes tire T to be pressed against and approach travel surface 1, sliding movement along the direction MD of travel of the tire causing tire T to be made to roll. In accordance with the present embodiment, travel surface 1 is made to be stationary while tire drive apparatus 2 is made to move in sliding fashion.

So long as travel surface 1 and tire drive apparatus 2 are able to engage in relative motion, there is no particular limitation with respect thereto. For example, it is possible for tire drive apparatus 2 to be made to be stationary while travel surface 1 is made to move. The location at which contact between force sensor 3 and tire T occurs is capable of being adjusted by changing the location at which rolling of tire T is initiated.

Controller 4 has tire drive controller 40 which controls drive carried out by tire drive apparatus 2, and detection results storage unit 41 which stores results of detection by force sensor 3 following receipt of a signal by the sensor, virtual region establisher 42, mapping data creator 43, and detected value calculator 44.

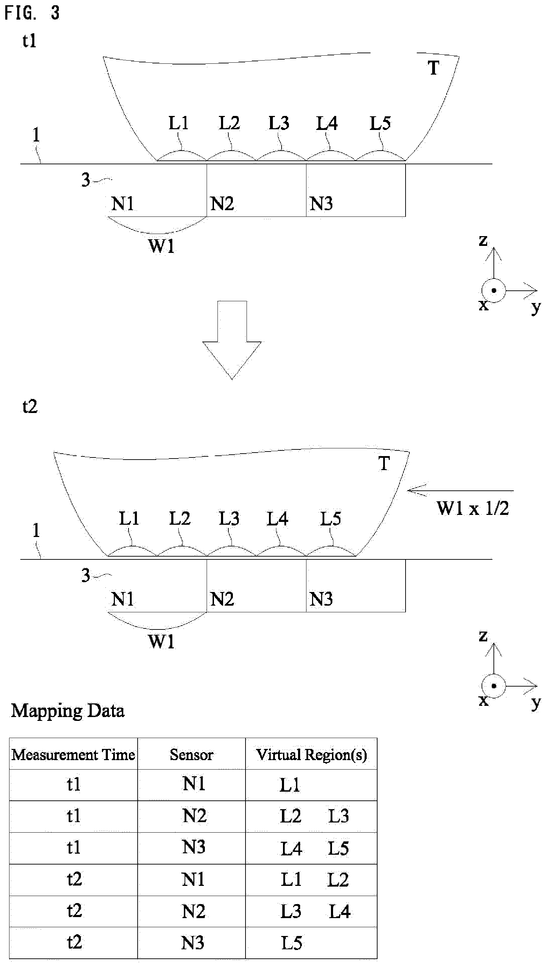

FIG. 3 is a drawing showing in schematic fashion the locations at which force sensors 3 provided at tire travel surface 1 come in contact with tire T. In the drawing, whereas three sensors 3 are for ease of description shown, it is sufficient that there be one or more of sensor 3.

At the example shown in FIG. 3, the location of the tire in the tire width direction y is shifted and measurement is carried out two times with each pass in which tire T is made to travel thereacross.

As shown in FIG. 3, at the region of tire T which is to be measured, virtual region establisher 42 establishes virtual regions (L1 through L5 at the example of FIG. 3) which are each $1/2^n$ the size of the detection region width W1 (where n is a natural number not less than 1) of force sensor(s) 3 provided at tire travel surface 1. The virtual regions (L1 through L5 at the example of FIG. 3) are regions that will be the units in which force is measured.

As shown in FIG. 3, tire drive controller 40 causes the locations at which force sensor(s) 3 provided at tire travel surface 1 come in contact with tire T to shift in a prescribed direction (the tire width direction y at FIG. 3) so that the same force sensor is made to come in contact with the same virtual region multiple times. At such time, measurement of force by sensor 3 is carried out multiple times, the results of detection by sensor 3 being stored at detection results storage unit 41.

n is a natural number not less than 1, it being possible for this to be chosen as appropriate in correspondence to the desired resolution. At the example of FIG. 3, n = 1, resulting in an improvement in resolution of 2x. In accordance with the present embodiment, tire travel surface 1 and tire T are made to come in contact in such a fashion as to be shifted by $1/2^n$ of detection region width W1 of force sensor 3 at a time.

Mapping data creator 43 creates mapping data associating, for each measurement time, data pertaining to positional relationships between virtual regions and sensor(s) 3. At the example of FIG. 3, because the amount of each shift is $1/2^n$ of detection region width W1 of sensor 3, the fractional percentages of the forces at each of the plurality of virtual regions included among the values detected by a single sensor 3 are all equal.

Mapping data creator 43 therefore causes association to be made not with respect to positional relationships per se but merely with respect to the correspondence that exists between sensor(s) and positional relationships.

At measurement time t1, sensor (N1) and virtual region (L1) are mutually associated, sensor (N2) and virtual regions (L2, L3) are mutually associated, and sensor (N3) and virtual regions (L4, L5) are mutually associated. At measurement time t2, sensor (N1) and virtual regions (L1, L2) are mutually associated, sensor (N2) and virtual regions (L3, L4) are mutually associated, and sensor (N3) and virtual region (L5) are mutually associated.

Detected value calculator 44 calculates forces ($f_{L1}$ through $f_{L5}$ at FIG. 3) corresponding to each virtual region (L1 through L5 at FIG. 3) based on values detected by sensors 3 and force composition relationships between sensors and virtual regions as defined by mapping data.

In the example shown in FIG. 3, the force composition relationships between sensors and virtual regions at measurement time t1 are as follows. The values detected by sensors N1 through N3 may respectively be expressed as $Fs_{N1-t1}$, $Fs_{N2-t1}$, and $Fs_{N3\_t1}$. The forces to be detected at virtual regions L1 through L5 may respectively be expressed as fu, $f_{L2}$, $f_{L3}$, $f_{b4}$, and $f_{L5}$.

$$Fs_{N1\_t1} = f_{L1}$$

$$Fs_{N2\_t1} = f_{L2} + f_{L3}$$

$$Fs_{N3\_t1} = f_{L4} + f_{L5}$$

The force composition relationships at measurement time t2 are as follows. The values detected by sensors N1 through N3 may respectively be expressed as $Fs_{N1-t2}$, $Fs_{N2\_t2}$, and $Fs_{N3\_t2}$.

$$Fs_{N1\_t2} = f_{L1} + f_{L2}$$

$$Fs_{N2\_t2} = f_{L3} + f_{L4}$$

$$Fs_{N3\_t2} = f_{L5}$$

All of the force composition relationships between sensors and virtual regions at measurement times t1 through t2 are given by the following formula.

$$\begin{bmatrix} 1 & 0 & 0 & 0 & 0 \\ 0 & 1 & 1 & 0 & 0 \\ 0 & 0 & 0 & 1 & 1 \\ 1 & 1 & 0 & 0 & 0 \\ 0 & 0 & 1 & 1 & 0 \\ 0 & 0 & 0 & 0 & 1 \end{bmatrix} \begin{bmatrix} f_{L1} \\ f_{L2} \\ f_{L3} \\ f_{L4} \\ f_{L5} \end{bmatrix} = \begin{bmatrix} Fs_{N1\_t1} \\ Fs_{N2\_t1} \\ Fs_{N3\_t1} \\ Fs_{N1\_t2} \\ Fs_{N2\_t2} \\ Fs_{N3\_t2} \end{bmatrix}$$

Because the right side of the foregoing formula are the values detected by sensors 3, it is sufficient to calculate the unknown terms which are the values $[f_{L1}, f_{L2}, f_{L3}, f_{L4}, f_{L5}]$ of the forces for each of virtual regions L1 through L5. Iteration is preferably used as the calculation method. Furthermore, if the number of sensors and the number of virtual regions are increased, the matrix at the left side of the foregoing formula will grow in size but the calculation method will be the same.

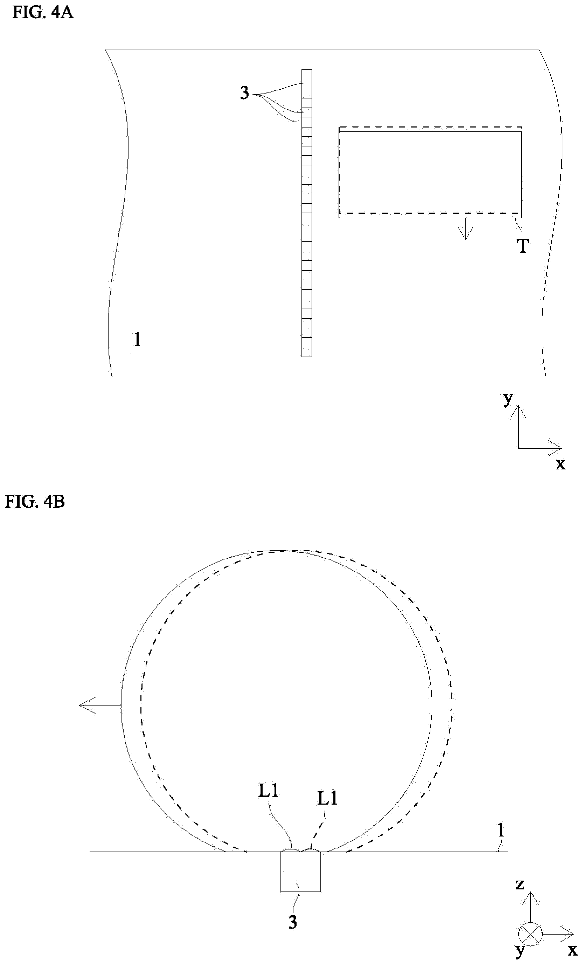

Whereas measurements in the example of FIG. 3 are performed with shifting being carried out in a prescribed direction (the tire width direction y) as shown at FIG. 4A, it is preferred in addition thereto that measurements be performed as shown at FIG. 4B with shifting being carried out in a direction (the tire circumferential direction x) perpendicular to the prescribed direction (the tire width direction y), and that values of forces be calculated for each of a plurality of virtual regions established in the prescribed direction (the tire width direction y) and in the direction perpendicular thereto (the tire circumferential direction x).

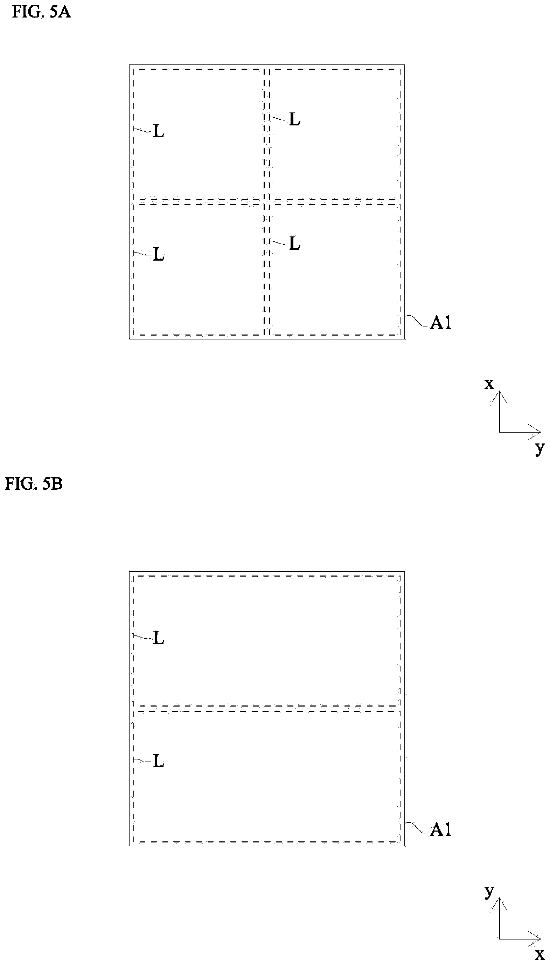

This is because if measurements are respectively performed with shifting being carried out in both directions (the tire width direction y and the tire circumferential direction x), since it will be possible as shown at FIG. 5A to establish virtual regions L (shown in broken line) in both directions with respect to detection regions A1 of sensors 3, it will be possible to improve resolution in both directions.

Note that where shifting is carried out only in the tire width direction y, since as shown at FIG. 5B a plurality of virtual regions L will be established in the tire width direction y with respect to detection regions A1 of sensors 3, it will be possible to improve resolution in only the tire width direction y.

When only detection of force in the tire width direction y is carried out, this will be useful because the number of times that measurement is carried out will be reduced. And of course it is also possible to carry out shifting in only the tire circumferential direction x.

It is preferred for increasing precision that the region in contact with the tire be smaller than the region that is measured by sensors over the course of the plurality of times that measurement is carried out. As shown in FIG. 3, it is assumed that only virtual region (L1) comes in contact with sensor (N1) at measurement time t1, and it is assumed that only virtual region (L5) comes in contact with sensor (N3) at measurement time t2. This is because where, in the unlikely event that contact with a sensor is made by other than a virtual region, while the formula will yield a solution, it will include an error.

In accordance with the present embodiment, a sensor group 3G in which a plurality of sensors 3 are arrayed in direction AD is employed as shown in FIG. 2. In the tire width direction y, the contact patch surface of tire T is smaller than the length in the direction AD of arrayal of sensor group 3G. If this condition is satisfied, because the region in contact with the tire will be smaller than the region measured by sensors, it will be possible to reduce or eliminate error.

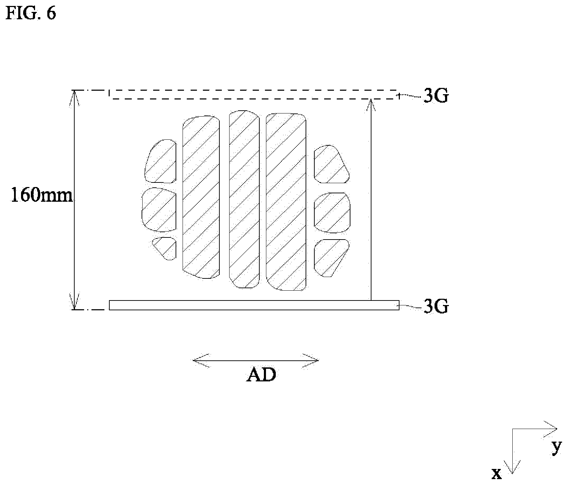

FIG. 6 is a drawing showing the positional relationship between sensor group 3G and the contact patch surface of tire T. In accordance with the present embodiment, to measure the contact patch surface of a tire, by causing the location at which tire travel surface 1 and tire T come in contact to move a plurality of times in a direction perpendicular to the direction AD of arrayal of sensor group 3G as shown in FIG. 6, the region detected by sensor group 3G is enlarged so as to be planar rather than linear. In accordance with the present embodiment, because sensor 3 is a square 8 mm on a side, carrying out measurement 20 times makes it possible to obtain a detection region of 160 mm.

In such a case, it is preferred that the region that is in contact with the tire (indicated by hatching at FIG. 6) at tire travel surface 1 be identified based on the results of detection, and that measurement with shifting by $1/2^n$ be omitted for the region that is not in contact with the tire at tire travel surface 1.

This will be useful because the number of times that measurement is carried out will be reduced. This is because at the region that is not in contact with the ground, since tire T is not in contact with the ground the force is 0, there being no need to carry out measurement to know what the result will be.

WORKING EXAMPLES

Actual examples are presented to show the usefulness of the present invention. The ground contact properties of a tire of size 205/60R15 having a basic groove pattern were measured. Load was 3.64 kN, and internal pressure was 230 kPa. Rolling conditions were such that the tire was allowed to freewheel.

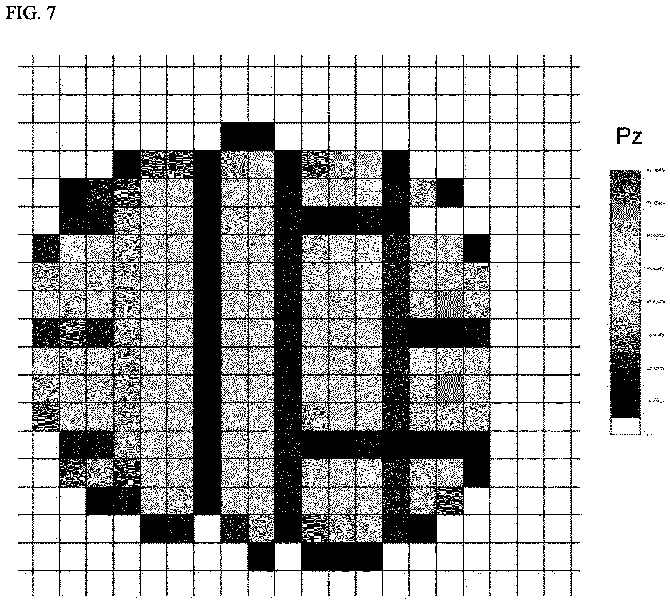

FIG. 7 is the result obtained when a sensor group 3G in which a plurality of sensors 3, each of which had a detection region A1 that was a square 8 mm on a side, were arrayed was used, shifting being carried out in the circumferential direction by 8 mm, i.e., one sensor width, at a time, the forces that were measured being assembled into an array, with the measured forces being divided by the sensor area to calculate the contact patch pressures Pz to a resolution of a square 8 mm on a side.

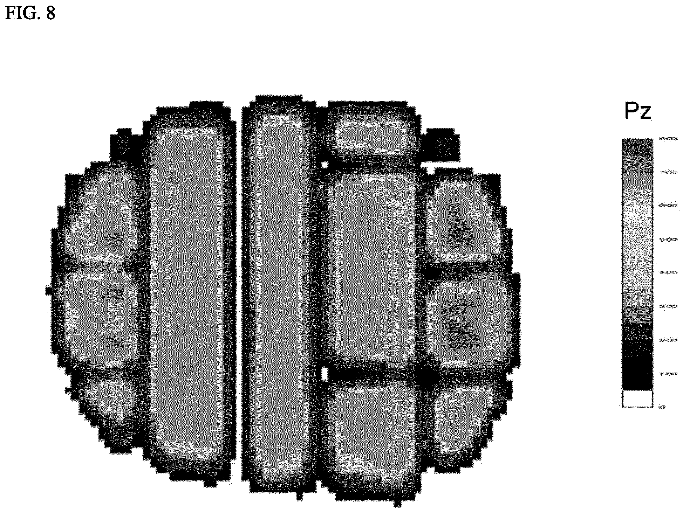

FIG. 8 is the result obtained when sensors 3, each of which had a detection region A1 that was a square 8 mm on a side, were used, shifting being carried out in increments of 8 mm x $1/2^2$ = 2 mm, four times the number of measurements being performed in each direction as were performed at FIG. 7, with contact patch pressures Pz being calculated for each virtual region (2 mm).

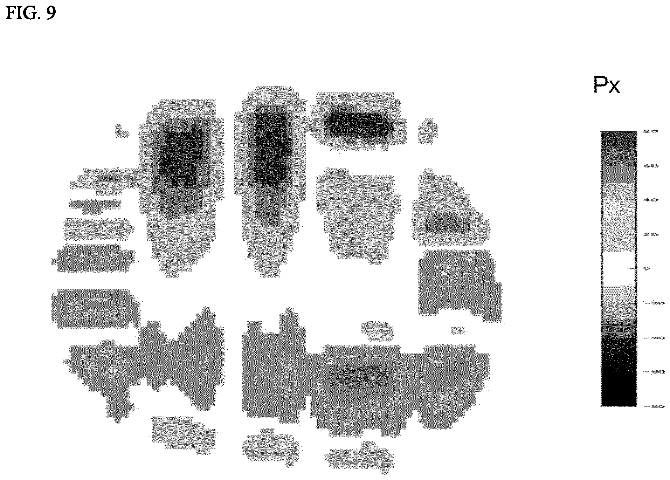

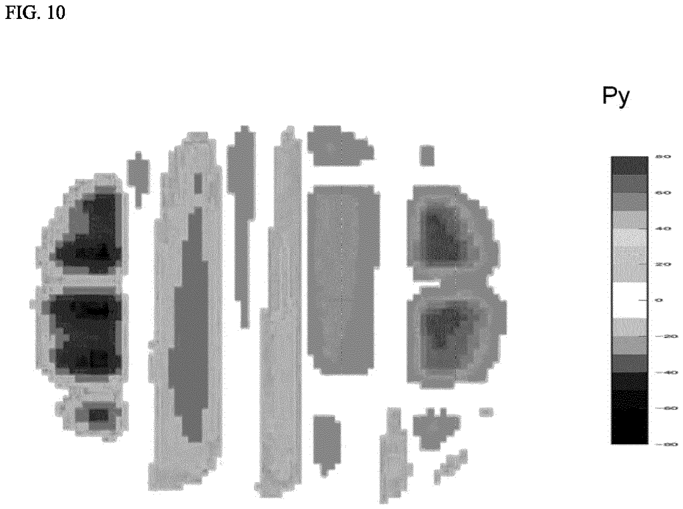

FIG. 9 is the result obtained when measurement was carried out in the same manner as at FIG. 8 and circumferential direction shear stress Px was calculated for each virtual region (2 mm). FIG. 10 is the result obtained when measurement was carried out in the same manner as at FIG. 8 and width direction shear stress Py was calculated for each virtual region (2 mm).

As is clear by looking at FIG. 7 and FIG. 8, because resolution is such that what had been 8 mm/pixel is reduced to 2 mm/pixel, detailed measurement is made possible.

Tire Ground Contact Properties Measurement Method

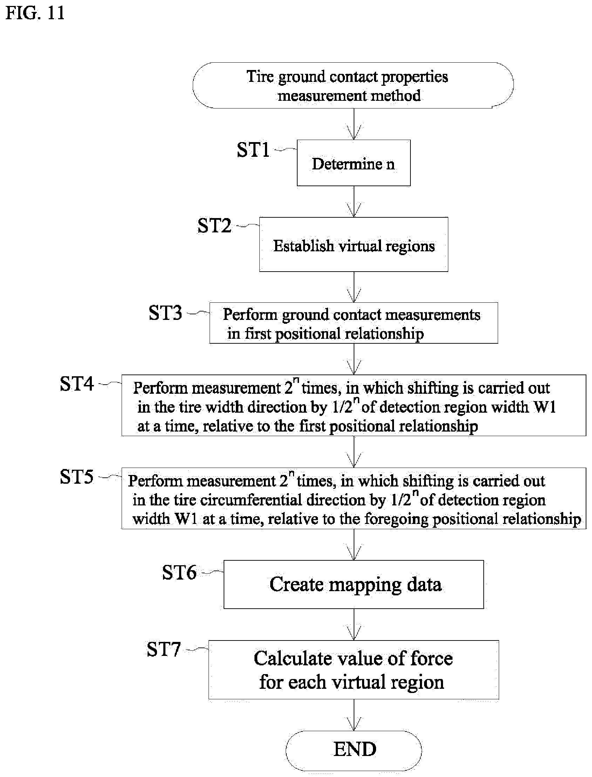

Operation of the foregoing device will be described with reference to FIG. 11.

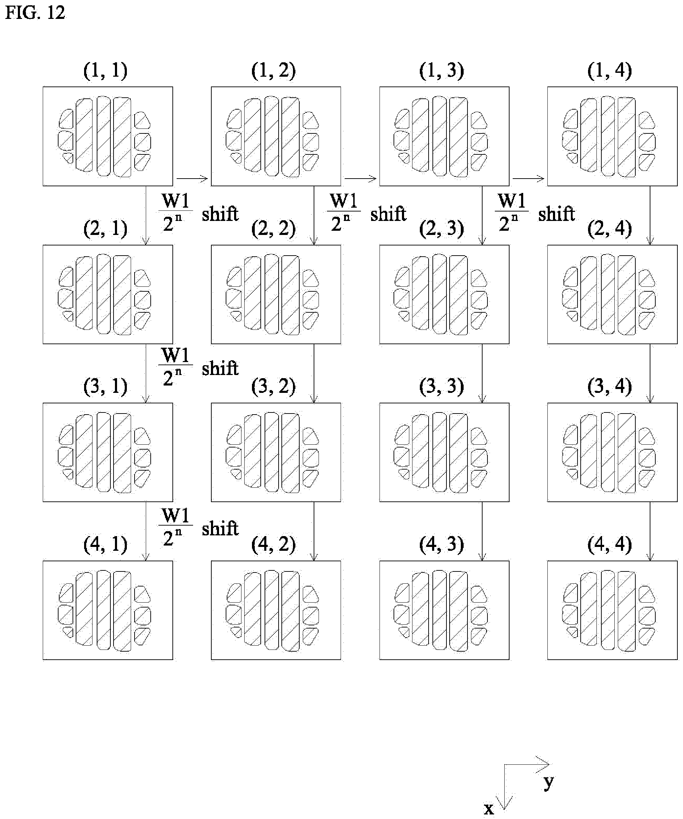

First, at step ST1, so as to determine resolution, n is determined. The value of n is input to the device. At the example of FIG. 12 and FIG. 8 through FIG. 10, this is taken to be n = 2, resulting in an improvement in resolution of 4x.

Next, at step ST2, at the region of tire T which is to be measured, virtual region establisher 42 establishes virtual regions which are each $1/2^n$ the size of the detection region width W1 of force sensor(s) 3 provided at tire travel surface 1

Next, at step ST3, as shown in FIG. 12, tire drive controller 40 performs ground contact measurement with sensors 3 and tire T in first positional relationship (1, 1) state. Here, the location at which tire travel surface 1 and tire T come in contact is made to move a plurality of (20) times in a direction perpendicular to the direction AD of arrayal of sensor group 3G, causing the detected region to be enlarged so as to be planar.

Next, at step ST4, tire drive controller 40 performs measurement $2^n$ times, in which shifting is carried out in the tire width direction y by $1/2^n$ of detection region width W1 at a time, relative to first positional relationship (1, 1). A shift of W1 x $1/2^n$ from first positional relationship (1, 1) will cause the state to change to positional relationship (1, 2). A further shift will cause the state to change to positional relationship (1, 3).

A further shift will cause the state to change to positional relationship (1, 4). Stated differently, this means that measurement of force by sensors 3 is performed in such a fashion that the locations at which tire travel surface 1 and tire T come in contact are shifted in the prescribed direction so that a sensor 3 is made to come in contact with the same virtual region multiple times.

Next, at step ST5, tire drive controller 40 performs measurement $2^n$ times, in which shifting is carried out in the tire circumferential direction x by $1/2^n$ of detection region width W1 at a time, relative to the foregoing positional relationships (1, 1), (1, 2), (1, 3), (1, 4). A shift in the tire circumferential direction x from positional relationship (1, 1) will cause the state to change to positional relationship (2, 1).

During the measurements at steps ST2 through ST4, measurements will be carried out for a total of 16 positional relationships, these being (1, 1) through (1, 4), (2, 1) through (2, 4), (3, 1) through (3, 4), and (4, 1) through (4, 4).

Next, at step ST6, mapping data creator 43 creates mapping data associating, for each measurement time, positional relationships between virtual regions and sensors 3.

Next, at step ST7, detected value calculator 44 calculates values of forces for each virtual region based on values detected by the sensors and force composition relationships between sensors and virtual regions as defined by mapping data.

Note that measurement must be carried out 20 times to measure a single planar collection of positional relationships as shown in FIG. 12 as at steps ST3 through 5 using a linear collection of sensors. To measure 16 planar collections thereof, measurement must be carried out 20 x 4 x 4 = 320 times.

To reduce the number of times that measurement is carried out and reduce measurement time, because it is possible to identify the region that comes in contact with the tire after measurement has been carried out 20 times, it is sufficient to omit measurement with shifting by $1/2^n$ for the region that does not come in contact with the tire.

As described above, a method for measuring tire ground contact properties in accordance with the present embodiment is such that, at the region of tire T which is to be measured, virtual regions are established which are each $1/2^n$ the size of the detection region width W1 (where n is a natural number not less than 1) of force sensor(s) 3 provided at tire travel surface 1 (ST2);

- measurement of force by sensors 3 is performed multiple times in such a fashion that the locations at which tire travel surface 1 and tire T come in contact are shifted in a prescribed direction so that a force sensor 3 is made to come in contact with the same virtual region multiple times (ST3 through 5);
- mapping data is created associating, for each measurement time, data pertaining to positional relationships between virtual regions and sensors 3 (ST6); and
- values of forces are calculated for each virtual region based on values detected by the sensors 3 and force composition relationships between sensors 3 and virtual regions as defined by mapping data creator 43 (ST7).

A device for measuring tire ground contact properties in accordance with the present embodiment comprises

- a virtual region establisher 42 that establishes, at the region of tire T which is to be measured, virtual regions which are each $1/2^n$ the size of the detection region width W1 (where n is a natural number not less than 1) of force sensor(s) 3 provided at tire travel surface 1;
- a tire drive controller 40 that causes measurement of force by sensors 3 to be performed multiple times in such a fashion that the locations at which tire travel surface 1 and tire T come in contact are shifted in a prescribed direction so that a force sensor 3 is made to come in contact with the same virtual region multiple times;
- a mapping data creator 43 that creates mapping data associating, for each measurement time, data pertaining to positional relationships between virtual regions and sensors 3; and
- a detected value calculator 44 that calculates values of forces for each virtual region based on values detected by the sensors 3 and force composition relationships between sensors 3 and virtual regions as defined by mapping data creator 43.

Thus, a force sensor 3 is made to come in contact with the same virtual region multiple times, and because the fractional percentages of the forces at each of the plurality of virtual regions included among the values detected by a single sensor 3 are defined by positional relationships between virtual regions and sensors 3, it is possible to perform calculations to solve for the force composition relationships. As a result, it is possible to carry out detection in units of virtual regions, each of which is smaller than the detection region A1 of sensor 3.

In accordance with the present embodiment, measurement of force at sensor 3 in which shifting is carried out by $1/2^n$ of detection region width W1 of sensor 3 at a time is performed multiple times at locations at which tire travel surface 1 and tire T come in contact, values of forces being calculated for each virtual region, the fractional percentages of the forces at each of the plurality of virtual regions included among the values detected by a single sensor 3 all being equal.

Thus, because shifting is carried out by $1/2^n$ of detection region width W1 of sensor 3 at a time, the fractional percentages of the forces at the respective virtual regions that are input at a single sensor 3 will all be equal, and it will be possible to perform calculations to solve for the force composition relationships. As a result, it will be possible to carry out detection in units of virtual regions, each of which is smaller than the detection region A1 of sensor 3.

In accordance with the present embodiment, in addition to performing measurements with shifting being carried out in the prescribed direction (the tire width direction y), measurements are performed with shifting being carried out in a direction (the tire circumferential direction x) perpendicular to the prescribed direction, and values of forces are calculated for each of a plurality of virtual regions established in both the prescribed direction (the tire width direction y) and the direction perpendicular thereto (the tire circumferential direction x).

In accordance with this constitution, because virtual regions are established in two directions, it will be possible to improve resolution in both directions.

In accordance with the present embodiment, the region in contact with the tire is smaller than the region that is measured by sensors over the course of the plurality of times that measurement is carried out.

Where this is the case, because errors due to presence of points of contact other than virtual regions will not be included, it will be possible to improve precision.

As one such mode, a sensor group 3G in which a plurality of sensors 3 are arrayed in a prescribed direction AD of arrayal might be used, the contact patch surface of tire T being smaller than the length in the direction AD of arrayal of sensor group 3G, may be cited as an example.

By causing the location at which tire travel surface 1 and tire T come in contact to move a plurality of times in a direction perpendicular to the direction AD of arrayal of sensor group 3G, the region detected by sensor group 3G is enlarged so as to be planar rather than linear, the region that is in contact with the tire at tire travel surface 1 is identified based on the results of detection, and shifting is omitted for the region that is not in contact with the tire at tire travel surface 1.

Where this is the case, measurement at locations for which it is understood that the measured value would be 0 are omitted, as a result of which it is possible to reduce the number of times that measurement is carried out and reduce measurement time.

In accordance with the present embodiment, tire travel surface 1 is a flat surface, tire T being made to roll relative to tire travel surface 1.

In accordance with this constitution, because all that need be done to carry out control of the location at which the sensors and the tire come in contact is to, each time that the tire is made to roll on tire travel surface 1, separate the tire from tire travel surface 1 and then change the location at which rolling begins, control is easily carried out.

Where it is possible to carry out control of the location at which the sensors and the tire come in contact, it will of course be possible to cause the travel surface to be made in the shape of a drum as at Patent Reference No. 1 and to carry out measurement while continuous travel is made to occur.

While embodiments in accordance with the present invention have been described above with reference to the drawings, it should be understood that the specific constitution thereof is not limited to these embodiments. The scope of the present invention is as indicated by the claims and not merely as described at the foregoing embodiments, and moreover includes all variations within the scope of or equivalent in meaning to that which is recited in the claims.

For example, whereas a sensor group 3G in which sensors 3 are arrayed in linear fashion was used to carry out measurement in accordance with the present embodiment, there is no limitation with respect thereto. Where a sensor group in which sensors 3 are arranged in matrix-like fashion is used, it will be possible to reduce measurement time. Furthermore, although doing so will cause measurement time to become long, it is possible to use a single sensor 3 to carry out measurement.

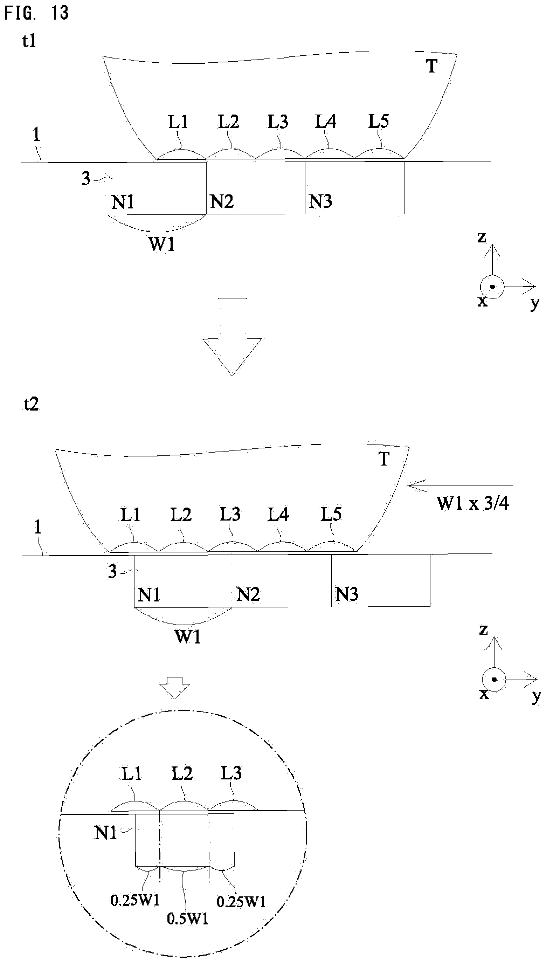

Whereas $1/2^n$ of detection region width W1 of sensor 3 was chosen as the amount of the shift in the foregoing embodiment, this may be varied. FIG. 13 is an example in which the amount of shift is 3/4 of detection region width W1 of sensor 3 despite an attempt to control the amount of shift to be 1/2 of detection region width W1 of sensor 3. In such a situation, it will be necessary to employ a detector to separately detect the positional relationship between virtual regions and sensor(s) 3. For example, this might be detected by means of a pulse associated with rotation of the tire and a pulse associated with driving of the road surface plate and/or road surface drum.

In the example shown in FIG. 13, the force composition relationships between sensors and virtual regions at measurement time t1 are as follows. The values detected by sensors N1 through N3 may respectively be expressed as $Fs_{N1-t1}$, $Fs_{N2-t1}$, and $Fs_{N3\_t1}$. The forces to be detected at virtual regions L1 through L5 may respectively be expressed as $f_{L1}$, $f_{L2}$, $f_{L3}$, $f_{L4}$, and $f_{L5}$. The fractional percentage (weight) of the force at virtual region L1 included among the values detected by sensor N1 at measurement time t1 may be expressed as $W_{t1\_N1\_L1}$.

$$Fs_{N1\_t1} = W_{t1\_N1\_L1} \cdot f_{L1}$$

$$Fs_{N2\_t1} = W_{t1\_N2\_L2} \cdot f_{L2} + W_{t1\_N2\_L3} \cdot f_{L3}$$

$$Fs_{N3\_t1} = W_{t1\_N3\_L4} \cdot f_{L4} + W_{t1\_N3\_L5} \cdot f_{L5}$$

The force composition relationships at measurement time t2 are as follows. The values detected by sensors N1 through N3 may respectively be expressed as $Fs_{N1\_t2}$, $Fs_{N2\_t2}$, and $Fs_{N3\_t2}$.

$$Fs_{N1\_t2} = W_{t2\_N1\_L1} \cdot f_{L1} + W_{t2\_N1\_L2} \cdot f_{L2} + W_{t2\_N1\_L3} \cdot f_{L3}$$

$$Fs_{N2\_t2} = W_{t2\_N2\_L3} \cdot f_{L3} + W_{t2\_N2\_L4} \cdot f_{L4} + W_{t2\_N2\_L5} \cdot f_{L5}$$

$$Fs_{N3\_t2} = W_{t2\_N3\_L5} \cdot f_{L5}$$

Here, as shown at the lower portion of FIG. 13, the amounts by which sensor N1 and virtual regions L1 through L3 overlap are respectively 0.25 x W1, 0.5 x W1, and 0.25 x W1, and $W_{t2\_N1\_L1}$, $W_{t2\_N1\_L2}$, and $W_{t2-N1\_L3}$ are 0.25, 0.5, and 0.25.

All of the force composition relationships between sensors and virtual regions at measurement times t1 through t2 are given by the following formula.

$$
\begin{bmatrix}
1 & 0 & 0 & 0 & 0 \\
0 & 1 & 1 & 0 & 0 \\
0 & 0 & 0 & 1 & 1 \\
0.25 & 0.5 & 0.25 & 0 & 0 \\
0 & 0 & 0.25 & 0.5 & 0.25 \\
0 & 0 & 0 & 0 & 0.25
\end{bmatrix}
\begin{bmatrix}
f_{L1} \\
f_{L2} \\
f_{L3} \\
f_{L4} \\
f_{L5}
\end{bmatrix}
=
\begin{bmatrix}
Fs_{N1\_t1} \\
Fs_{N2\_t1} \\
Fs_{N3\_t1} \\
Fs_{N1\_t2} \\
Fs_{N2\_t2} \\
Fs_{N3\_t2}
\end{bmatrix}
$$

Thus, it is also possible to adopt a constitution in which fractional percentages of forces at each of a plurality of virtual regions included among values detected by a single sensor are calculated in correspondence to amounts of overlap between virtual regions and sensor(s), and in which values of forces are calculated for each virtual region.

Structure employed at any of the foregoing embodiment(s) may be employed as desired at any other embodiment(s). The specific constitution of the various components is not limited only to the foregoing embodiment(s) but admits of any number of variations without departing from the gist of the present invention.

LIST OF REFERENCE SIGNS

| | |
|---|---|
| 1 | tire travel surface |
| 2 | tire drive apparatus |
| 3 | sensors |
| 3G | sensor group |
| 4 | controller |
| 40 | drive controller |
| 41 | storage unit |
| 42 | virtual region establisher |
| 43 | mapping data creator |
| 44 | detected value calculator |
| T | tire |
| W1 | detection region width |
| L, L1 to L5 | virtual regions |
| A1 | detection region |
| AD | direction of arrayal of sensor group 3G |
| MD | direction of travel |

**Claims**

1. A method for measuring tire ground contact properties in which, at a region of a tire to be measured, virtual regions are established that are each $1/2^n$ of a size of a detection region width (where n is a natural number not less than 1) of a force sensor provided at a tire travel surface;

- measurement of force by the sensor is performed a plurality of times in such a fashion that a location at which the tire travel surface and the tire come in contact is shifted in a prescribed direction so that the force sensor is made to come in contact with a single virtual region a plurality of times;
- mapping data is created associating, for each measurement time, data pertaining to positional relationships between the virtual regions and the sensor; and
- values of forces are calculated for each of the virtual regions based on values detected by the sensor and force composition relationships between the sensor and the virtual regions as defined by the mapping data.

2. The method according to claim 1,
   wherein measurement of force by the sensor is performed a plurality of times in such a fashion that a location at which the tire travel surface and the tire come in contact is shifted by $1/2^n$ of the detection region width of the sensor at a time; and
   wherein values of forces are calculated for each of the virtual regions in such a fashion that fractional percentages of forces at each of a plurality of virtual regions included among values detected by a single sensor are all equal.

3. The method according to claim 1,
   wherein fractional percentages of forces at each of a plurality of virtual regions included among values detected by a single sensor are calculated in correspondence to amounts of overlap between the virtual regions and the sensor, and values of forces are calculated for each of the virtual regions.

4. The method according to any of claims 1 to 3,
   wherein, in addition to performing measurements with shifting being carried out in the prescribed direction, measurements are performed with shifting being carried out in a direction perpendicular to the prescribed direction, and values of forces are calculated for each of a plurality of virtual regions established in both the prescribed direction and the perpendicular direction.

5. The method according to any of claims 1 to 4,
   wherein a region in contact with the tire is smaller than the region that is measured by the sensor over the course of the plurality of times that measurement is carried out.

6. The method according to any of claims 1 to 5 ,
   wherein a sensor group in which the sensor is one of a plurality of sensors arrayed in a prescribed arrayal direction is used, and a contact patch surface of the tire is smaller than a length in the direction of arrayal of the sensor group.

7. The method according to claim 6,
   wherein by causing a location at which the tire travel surface and the tire come in contact to move a plurality of times in the direction perpendicular to the direction of arrayal of the sensor group, a region detected by the sensor group is enlarged so as to be planar rather than linear; a region that is in contact with the tire at the tire travel surface is identified based on results of detection; and the shifting is omitted for a region that is not in contact with the tire at the tire travel surface.

8. The method according to any of claims 1 to 7,
   wherein the tire travel surface is a flat surface, and the tire is made to roll relative to the tire travel surface.

9. A device for measuring tire ground contact properties comprising:

   - a virtual region establisher that establishes, at a region of a tire to be measured, virtual regions that are each $1/2^n$ of a size of a detection region width (where n is a natural number not less than 1) of a force sensor provided at a tire travel surface;
   - a tire drive controller that causes measurement of force by the sensor to be performed a plurality of times in such a fashion that a location at which the tire travel surface and the tire come in contact is shifted in a prescribed direction so that the force sensor is made to come in contact with a single virtual region a plurality of times;
   - a mapping data creator that creates mapping data associating, for each measurement time, data pertaining to positional relationships between the virtual regions and the sensor; and
   - a detected value calculator that calculates values of forces for each of the virtual regions based on values detected by the sensor and force composition relationships between the sensor and the virtual regions as defined by the mapping data.

10. The device according to claim 9,
wherein the tire drive controllercauses measurement of force by the sensor to be performed a plurality of times in such a fashion that a location at which the tire travel surface and the tire come in contact is shifted by $1/2^n$ of the detection region width of the sensor at a time; and wherein the detected value calculator causes values of forces to be calculated for each of the virtual regions in such a fashion that fractional percentages of forces at each of a plurality of virtual regions included among values detected by a single sensor are all equal.

11. The device according to claim 9,
wherein the detected value calculator causes fractional percentages of forces at each of a plurality of virtual regions included among values detected by a single sensor to be calculated in correspondence to amounts of overlap between the virtual regions and the sensor, and causes values of forces to be calculated for each of the virtual regions.

12. The device according to any of claims 9 to 11,
wherein, in addition to performing measurements with shifting being carried out in the prescribed direction, measurements are performed with shifting being carried out in a direction perpendicular to the prescribed direction, and values of forces are calculated for each of a plurality of virtual regions established in both the prescribed direction and the perpendicular direction.

13. The device according to any of claims 9 to 12,
wherein a region in contact with the tire is smaller than the region that is measured by the sensor over the course of the plurality of times that measurement is carried out.

14. The device according to any of claims 9 to 13,
wherein a sensor group in which the sensor is one of a plurality of sensors arrayed in a prescribed arrayal direction is used, and a contact patch surface of the tire is smaller than a length in the direction of arrayal of the sensor group.

15. The device according to claim 14,
wherein by causing a location at which the tire travel surface and the tire come in contact to move a plurality of times in the direction perpendicular to the direction of arrayal of the sensor group, a region detected by the sensor group is enlarged so as to be planar rather than linear; a region that is in contact with the tire at the tire travel surface is identified based on results of detection; and the shifting is omitted for a region that is not in contact with the tire at the tire travel surface.

16. The device according to any of claims 9 to 15,
wherein the tire travel surface is a flat surface, and the tire is made to roll relative to the tire travel surface.

FIG. 1

2

T

MD

1

3

z

y   x

2

4

Drive controller — 40

Detection results storage unit — 41

3

Virtual region establisher — 42

Mapping data creator — 43

Detected value calculator — 44

FIG. 2

## FIG. 3

t1

t2

Mapping Data

| Measurement Time | Sensor | Virtual Region(s) | |
|---|---|---|---|
| t1 | N1 | L1 | |
| t1 | N2 | L2 | L3 |
| t1 | N3 | L4 | L5 |
| t2 | N1 | L1 | L2 |
| t2 | N2 | L3 | L4 |
| t2 | N3 | L5 | |

FIG. 4A

FIG. 4B

FIG. 5A

FIG. 5B

FIG. 6

FIG. 7

FIG. 8

FIG. 9

Px

FIG. 10

FIG. 11

$$\text{Tire ground contact properties measurement method}$$

ST1 — Determine n

ST2 — Establish virtual regions

ST3 — Perform ground contact measurements in first positional relationship

ST4 — Perform measurement $2^n$ times, in which shifting is carried out in the tire width direction by $1/2^n$ of detection region width W1 at a time, relative to the first positional relationship

ST5 — Perform measurement $2^n$ times, in which shifting is carried out in the tire circumferential direction by $1/2^n$ of detection region width W1 at a time, relative to the foregoing positional relationship

ST6 — Create mapping data

ST7 — Calculate value of force for each virtual region

END

FIG. 12

|  (1, 1)  |  (1, 2)  |  (1, 3)  |  (1, 4)  |

$\frac{W1}{2^n}$ shift    $\frac{W1}{2^n}$ shift    $\frac{W1}{2^n}$ shift

|  (2, 1)  |  (2, 2)  |  (2, 3)  |  (2, 4)  |

$\frac{W1}{2^n}$ shift

|  (3, 1)  |  (3, 2)  |  (3, 3)  |  (3, 4)  |

$\frac{W1}{2^n}$ shift

|  (4, 1)  |  (4, 2)  |  (4, 3)  |  (4, 4)  |

**FIG. 13**

t1

t2

## INTERNATIONAL SEARCH REPORT

International application No.

PCT/JP2017/020828

### A. CLASSIFICATION OF SUBJECT MATTER
*G01M17/02*(2006.01)i, *B60C19/00*(2006.01)i

According to International Patent Classification (IPC) or to both national classification and IPC

### B. FIELDS SEARCHED

Minimum documentation searched (classification system followed by classification symbols)
G01M17/02, B60C19/00

Documentation searched other than minimum documentation to the extent that such documents are included in the fields searched
Jitsuyo Shinan Koho          1922-1996   Jitsuyo Shinan Toroku Koho   1996-2017
Kokai Jitsuyo Shinan Koho    1971-2017   Toroku Jitsuyo Shinan Koho   1994-2017

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2011-504227 A   (Ventech GmbH), 03 February 2011 (03.02.2011), paragraphs [0007] to [0028], [0042] to [0048]; fig. 1 to 4 & US 2010/0292953 A1 paragraphs [0006] to [0023], [0042] to [0048]; fig. 1 to 4 & EP 2210078 A1          & KR 10-2010-0083834 A & CN 101855530 A | 1-16 |
| Y | JP 2004-257754 A   (Shinkoh Electronics Co., Ltd.), 16 September 2004 (16.09.2004), paragraphs [0007] to [0020]; fig. 1 to 5 & US 2004/0184042 A1 paragraphs [0021] to [0040]; fig. 1 to 5 | 1-16 |

| ☒ | Further documents are listed in the continuation of Box C. | ☐ | See patent family annex. |
|---|---|---|---|

\* Special categories of cited documents:
"A" document defining the general state of the art which is not considered   to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search   03 August 2017 (03.08.17) | Date of mailing of the international search report   15 August 2017 (15.08.17) |
|---|---|
| Name and mailing address of the ISA/   Japan Patent Office   3-4-3,Kasumigaseki,Chiyoda-ku,   Tokyo 100-8915,Japan | Authorized officer   Telephone No. |

Form PCT/ISA/210 (second sheet) (January 2015)

**INTERNATIONAL SEARCH REPORT**

International application No.

PCT/JP2017/020828

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | JP 2005-96595 A (The Yokohama Rubber Co., Ltd.),<br>14 April 2005 (14.04.2005),<br>paragraphs [0043] to [0052]; fig. 3 to 8<br>(Family: none) | 5-7,13-15<br>1-4,8-12,16 |
| A | JP 2012-32324 A (Tokai Rubber Industries, Ltd.),<br>16 February 2012 (16.02.2012),<br>entire text; all drawings<br>(Family: none) | 1-16 |
| A | JP 2014-134512 A (Bridgestone Corp.),<br>24 July 2014 (24.07.2014),<br>entire text; all drawings<br>(Family: none) | 1-16 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014021012 A